# EUROPÄISCHE PATENTSCHRIFT

(11) **EP 1 081 412 B1**
(45) Veröffentlichungstag und Bekanntmachung des Hinweises auf die Patenterteilung: **13.10.2004**
(21) Anmeldenummer: 00114058.1
(22) Anmeldetag: 06.07.2000
(51) Int. Cl.: F16G 1/28

(54) **Zahnriemen**
Toothed belt
Courroie crantée

(30) Priorität: 28.08.1999 DE 19941014
(43) Veröffentlichungstag der Anmeldung: 07.03.2001
(73) Patentinhaber: Volkswagen Aktiengesellschaft, 38436 Wolfsburg (DE)
(72) Erfinder: Strauss, Arnold, Dipl.-Ing., 38550 Isenbüttel (DE); Urban, Peter, 38440 Wolfsburg (DE)

(56) Entgegenhaltungen:
- EP-A- 0 022 928
- DE-C- 521 817
- GB-A- 1 400 557
- US-A- 3 889 545
- US-A- 4 022 071
- PATENT ABSTRACTS OF JAPAN vol. 001, no. 060 (M-021), 10. Juni 1977 (1977-06-10) & JP 52 009754 A (NIPPON TELEGR & TELEPH CORP), 25. Januar 1977 (1977-01-25)
- PATENT ABSTRACTS OF JAPAN vol. 012, no. 485 (M-777), 19. Dezember 1988 (1988-12-19) & JP 63 203944 A (MASAKI DOI), 23. August 1988 (1988-08-23)

## Beschreibung

Die Erfindung betrifft einen Zahnriemen, bestehend aus einem elastomeren Werkstoff und einem Festigkeitsträger.

Zahnriemen mit zugeordneten Zahnriemenscheiben werden in der Kraftfahrzeugtechnik verwendet, um beispielsweise die Drehbewegung der Kurbelwelle für den Antrieb der Nockenwelle oder der Kraftstoffeinspritzpumpe zu nutzen. Hierfür sind dem Zahnriemen Riemenscheiben zugeordnet, wobei die Zähne des Riemens mit entsprechenden Konturen der rotierenden Scheibe zusammenwirken. Für eine effektive Kraftübertragung ist es notwendig, den Schlupf zwischen Zahnriemen und Riemenscheibe gering zu halten. Dies wird durch die Spannung des Zahnriemens gewährleistet. Eine Erhöhung der Spannung des Zahnriemens bedingt jedoch eine zusätzliche Belastung für dieses, ohnehin hoch beanspruchte Bauteil. Weitere zusätzliche Belastungen ergeben sich durch eine Leistungs- bzw. Drehzahlsteigerung der Antriebseinheiten von Kraftfahrzeugen. Im Ergebnis der zunehmenden Beanspruchungen vermindert sich jedoch die Lebensdauer des Zahnriemens.

Zahnriemen bestehen üblicherweise aus einem elastomeren Werkstoff, in dem ein Festigkeitsträger eingebunden ist. Der Festigkeitsträger bestimmt die Zugfestigkeit des Zahnriemens und hat folglich einen erheblichen Einfluß auf die Lebensdauer. Als Festigkeitsträger wurden zunächst textile Kordfäden verwendet, die zum Erreichen höherer Festigkeitswerte zunehmend durch Einlagen aus Stahlkord oder aus Glaskord ersetzt wurden. Diese Materialien sind relativ problemlos zu verarbeiten, so daß eine feste Verbindung zwischen dem elastomeren Material und dem innenliegenden Festigkeitsträger gewährleistet werden kann. Allerdings ist die erreichbare Zugfestigkeit begrenzt, so daß zumindest bei der Übertragung großer Impulskräfte Nachteile bezüglich Leistungsübertragung und Lebensdauer festzustellen sind.

Zur Verminderung derartiger Nachteile wurde bereits vorgeschlagen, einen Festigkeitsträger aus Metall zu verwenden. Eine solche technische Lösung ist aus US-PS 3 889 545 bekannt. Dieser Riemen weist ein dünnes Metallband auf, das zur Bildung mehrerer Schichten spiralförmig übereinander gewickelt ist. Zwischen den Metallschichten ist jeweils elastomeres Material angeordnet. Mit diesem Riemen wird zweifelsfrei eine hohe Zugfestigkeit erreicht, die eine hohe Lebensdauer gewährleistet. Nachteilig ist die aufwendige Herstellung. Außerdem ist bei hohen Drehzahlen eine erhebliche Geräuschentwicklung zu erwarten.

Für die Herstellung von Zahnriemen wird überwiegend das sogenannte Durchdrückverfahren angewendet. Bei diesem Verfahren wird der Zahnriemen auf einer walzenförmigen Negativform aufgebaut. Diese Form weist Nuten zur Ausformung der Zähne auf. Zunächst wird auf die Form ein Polyamidgewebe aufgelegt. Das Gewebe stellt die Abdeckung der später auszuformenden Zähne dar. Nachfolgend wird der Festigkeitsträger aufgelegt und auf diesem wird das elastomere Material aufgetragen. Der so aufgebaute Rohling wird mit einer Manschette abgedeckt, die druckbeaufschlagbar ist. Im folgenden Verfahrensschritt wird unter Druck- und Wärmeeinfluß vulkanisiert, wobei das elastomere Material über den Festigkeitsträger in die Nutenstruktur durchgedrückt" wird. Somit entsteht die angestrebte Zahnkontur. Gleichzeitig wird die Verbindung von elastomerem Werkstoff und Festigkeitsträger stabilisiert.

Ein weiterer Festigkeitsträger aus Metall wird in US-PS 4 022 071 beschrieben, der hier als netzartiges Drahtgewebe ausgestaltet ist. Bei dieser technischen Lösung ist allerdings fragwürdig, ob die Verbindung zwischen dem Drahtgewebe und dem umgebenden Material ausreichend stabil ist, um auch bei hoher Belastung die angestrebte Festigkeit zu gewährleisten.

Sofern das Durchdrückverfahren zur Herstellung eines Kraftübertragungsriemens gemäß der oben genannten US-PS 4 022 071 angewendet wird, kann offensichtlich nicht genügend elastomeres Material durch das Drahtgewebe fließen. Demzufolge ist die erreichbare Verbindung von Festigkeitsträger und umgebendem Material nicht zufriedenstellend.

Die gattungbildenden DE-PS-521 817 und EP 0 022 928 A1 zeigen zugfeste Einlagen für Treib- oder Profilriemen aus einem perforierten Metall- oder Textilband. Die Herstellung der Perforation bzw. der entsprechenden Löcher erfordert hier einen zusätzlichen Arbeitsgang.

Aufgabe der Erfindung ist, einen Zahnriemen gemäß dem Oberbegriff des Patentanspruchs zu schaffen, der im Durchdrückverfahren hergestellt werden kann, jedoch mit geringerem Aufwand als der Stand der Technik. Dieser Zahnriemen soll insbesondere zur Übertragung großer Impulskräfte geeignet sein und auch für diesen Anwendungsfall eine hohe Lebensdauer aufweisen.

Diese Aufgabe wird erfindungsgemäß durch einen Zahnriemen mit den Merkmalen des Patentanspruchs gelöst.

Durch die vorgeschlagene Lösung entsteht ohne einen besonderen Lochvorgang ein fester Materialverbund zwischen dem elastomeren Werkstoff und dem als Flechtband ausgebildeten Festigkeitsträger. Somit wird eine bessere Kraftverteilung im gesamten Zahnriemen möglich, in deren Folge eine höhere Festigkeit und ein besseres Dehnverhalten realisiert werden können. Weiterhin wird eine definierte Dauerfestigkeit und ein verbessertes Ermüdungsverhalten erreicht. Diese Faktoren bewirken in der Summe eine erhöhte Lebensdauer des Zahnriemens, die auch bei starker Beanspruchung durch Übertragung von großen Impulskräften gewährleistet ist. Besonders vorteilhaft ist, dass diese verbesserten Eigenschaften unter Beibehaltung des bisher zur Herstellung von Zahnriemen üblichen Verfahrens, des Durchdrückverfahrens, erreichbar sind.

Ein Ausführungsbeispiel der Erfindung ist in der Zeichnung dargestellt und wird nachfolgend beschrieben. Es zeigen:
- Fig. 1: den grundsätzlichen Aufbau eines im Durchdrückverfahren hergestellten Zahnriemens in Schnittdarstellung
- Fig. 2: einen Grundkörper in Ausgestaltung als Flechtband
- Fig. 3: einen Grundkörper in Ausgestaltung mit mehreren Stahlbäudern nicht in Übereinstimmung mit der vorliegenden Erfindung
- Fig.4: in schematischer Darstellung eine Vorrichtung zur Durchführung des "Durchdrückverfahrens".

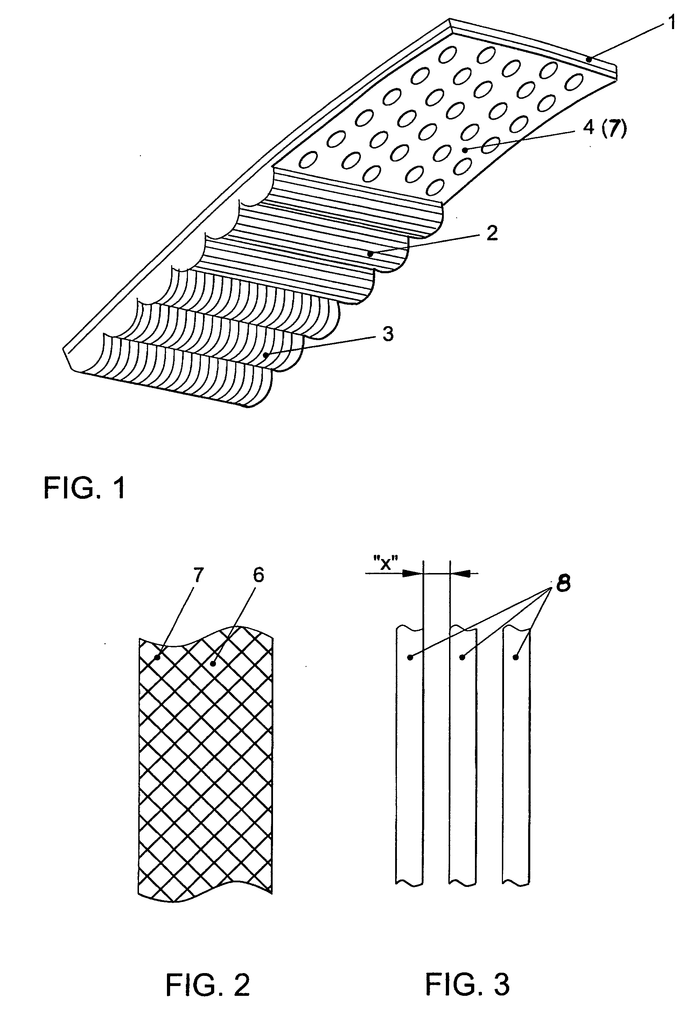

Der in Figur 1 dargestellte Zahnriemen weist einen elastomeren Werkstoff auf, aus dem der Rücken 1 und die Zähne 2 bestehen. Die Zähne 2 sind mit einem Polyamidgewebe 3 abgedeckt. Im elastomeren Werkstoff ist zwischen dem Rücken 1 und den Zähnen 2 ein Festigkeitsträger angeordnet. Dieser Festigkeitsträger wird durch einen flachen Grundkörper 4 gebildet.

In den Figuren 1 und 2 ist der Grundkörper 4 als Flecht band 7 ausgestaltet. Im Flecht band 7 sind hierbei Durchgangsöffnungen 6 vorgesehen. Die erfindungsgemäße Ausgestaltung des Grundkörpers 4 als Flechtband 7 ist in Figur 2 dargestellt, so dass Durchgangsöffnungen 6 vorhanden sind.

Ein Grundkörper 4 aus mehreren Bändern 8 ist in Figur 3 gezeigt. Die Bänder 8 verlaufen jeweils parallel zueinander. Zwischen benachbarten Bändern 8 ist ein Abstand "x" vorhanden. Der Abstand "x" kann entweder zwischen allen Bändern 8 gleich sein oder auch unterschiedlich.

Die Durchgangsöffnungen 6 bzw. der funktionsgleiche Abstand "x" weisen jeweils einen bestimmten freien Durchströmquerschnitt auf. Dieser Durchströmquerschnitt muss in jedem Fall so groß sein, dass während der Vulkanisation elastomeres Material hindurchfliesen kann.

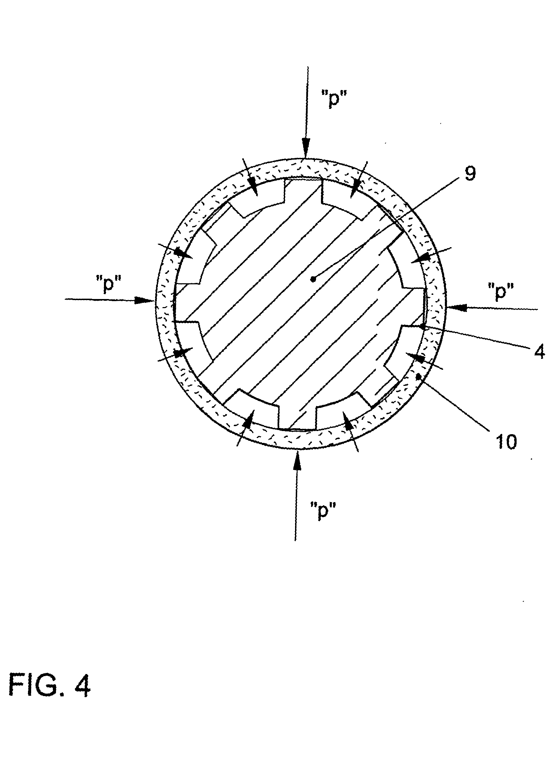

Anhand Figur 4 ist der grundsätzliche Ablauf bei der Herstellung eines erfindungsgemäßen Zahnriemens im Durchdrückverfahren ersichtlich: In einer walzenförmigen Negativform 9 sind mehrere Nuten zur Ausformung der Zähne 2 ausgestaltet. Auf die Form 9 wird zunächst das Polyamidgewebe 3 aufgelegt, das die Abdeckung der später auszuformenden Zähne darstellt. Nachfolgend wird der Grundkörper 4 des Festigkeitsträger, dass heißt das Flechtband 7, aufgelegt. Der Grundkörper 4 kann in unterschiedlichen Breiten ausgestaltet werden. Die mögliche Variationsbreite liegt zwischen dem Durchmesser üblicher Kordfasern und der maximalen Breite der Negativform 9. Die realisierbare Höhe des Grundkörpers 4 wird grundsätzlich durch die Riemenstärke als Obergrenze und durch die Auswalzbarkeit als Untergrenze festgelegt. Allerdings ist es zweckmäßig, den Grundkörper 4 als flaches Gebilde zu gestalten. Die Länge des Grundkörpers 4 entspricht mindestens der Riemenlänge. Nachdem der Grundkörper 4 auf die Negativform 9 aufgelegt worden ist, wird das elastomere Material 10 aufgetragen. Anschließend erfolgt eine Beaufschlagung mit einem Druck "p". Unter weiterem Druck und Wärmeeinfluss wird vulkanisiert. Das elastomere Material 10 wird über die Durchgangsöffnungen 6 in die Nutenstruktur der Negativform 9 gedrückt. Somit entsteht die Kontur eines Zahnriemens gemäß der Darstellung in Figur 1.

### BEZUGSZEICHENLISTE

- 1: Rücken
- 2: Zähne
- 3: Polyamidgewebe
- 4: Grundkörper des Festigkeitsträgers
- 5: Flachband
- 6: Durchgangsöffnung
- 7: Flechtband
- 8: Stahlbänder
- 9: Negativform
- 10: elastomeres Material

- "x": Abstand zwischen zwei Stahlbändern
- "p": Druckbeaufschlagung

## Patentansprüche

1. Zahnriemen, bestehend aus einem elastomeren Werkstoff und einem Festigkeitsträger, der einen flachen Grundkörper (4) mit Durchgangsöffnungen (6) aufweist, die einen derart freien Durchströmquerschnitt haben, dass während der Vulkanisation elastomeres Material (10) durch die Durchgangsöffnungen (6) fließen kann, **dadurch gekennzeichnet, dass** durch den als Flechtband (7) ausgeführten Grundkörper (4) die Durchgangsöffnungen (6) gebildet sind.

## Claims

1. Toothed belt, consisting of an elastomeric material and of a strength medium which has a flat basic body (4) with passage orifices (6) which have a free throughflow cross section such that, during vulcanization, elastomeric material (10) can flow through the passage orifices (6), **characterized in that** the passage orifices (6) are formed by the basic body (4) designed as a braided band (7).

## Revendications

1. Courroie crantée constituée par une matière élastomère et par une armature comportant un corps de base (4) plat muni de trous traversants (6) ayant une section de passage libre telle que la matière élastomère (10) peut s'écouler par les trous traversants (6) pendant la vulcanisation, **caractérisé en ce que** les trous traversants (6) sont formés par le corps de base (4) réalisé sous forme de ruban tressé (7).
